# EUROPEAN PATENT APPLICATION

(11) **EP 4 064 212 A2**
(43) Date of publication of application: **28.09.2022**
(21) Application number: 22180961.9
(22) Date of filing: 24.06.2022
(51) Int. Cl.: G06V 10/26, G06V 10/25

(54) **METHOD AND APPARATUS FOR DETECTING CAMERA OCCLUSION, DEVICE, STORAGE MEDIUM AND PROGRAM PRODUCT**

(30) Priority: 16.08.2021 CN 202110934979
(71) Applicant: BEIJING BAIDU NETCOM SCIENCE TECHNOLOGY CO., LTD., No. 10 Shangdi 10th Street Haidian District Beijing 100085 (CN)
(72) Inventor: WANG, Xiangyang, Beijing, 100085 (CN); XING, Huaifei, Beijing, 100085 (CN)
(74) Representative: V.O.

(57) **Abstract**

The present disclosure provides a method and apparatus for detecting a camera occlusion, an electronic device, a computer readable storage medium and a computer program product, and relates to the fields of technologies such as a image recognition technology, a cloud service technology and an abnormal state detection technology. The method comprises: determining a background image corresponding to a current time period in response to a camera not moving; determining, according to an actual image of a current frame and the background image, a foreground image of the current frame; determining a target area of a separate object having a largest outer contour in the foreground image; and determining an occlusion state of the camera at the current frame according to the target area. According to the method, the background image is controlled to correspond to the time when the camera does not move, so as to avoid the error discrimination that the moving camera is erroneously discriminated as being in the occlusion state. The occlusion state is determined according to the target area of the separate object having the largest outer contour in the foreground image, which can avoid the error discrimination caused by the sum of the areas of a plurality of moving small objects exceeding an area threshold, thereby improving the accuracy of the discrimination for the occlusion state of the camera.

## Description

### TECHNICAL FIELD

The present disclosure relates to the field of image processing technology, specifically to the fields of technologies such as a image recognition technology, a cloud service technology and an abnormal state detection technology, and particularly to a method and apparatus for detecting a camera occlusion, an electronic device, a computer readable storage medium and a computer program product.

### BACKGROUND

In a video monitoring scenario, there may be a situation where a camera is occluded by a foreign object, which makes the camera unable to monitor an normal region and even causes the monitoring to fail.

A manual subjective detection requires a long-time continuous observation on monitoring images, resulting in a high cost and a low efficiency. For the monitoring of a plurality of cameras, even a comprehensive and timely detection cannot be achieved. Therefore, there is a need for an objective, fast and effective camera detection method.

### SUMMARY

Embodiments of the present disclosure provide a method and apparatus for detecting a camera occlusion, an electronic device, a computer readable storage medium and a computer program product.

In a first aspect, embodiments of the present disclosure provide a method for detecting a camera occlusion, comprising: determining a background image corresponding to a current time period in response to a camera not moving; determining, according to an actual image of a current frame and the background image, a foreground image of the current frame; determining a target area of a separate object having a largest outer contour in the foreground image; and determining an occlusion state of the camera at the current frame according to the target area.

In a second aspect, embodiments of the present disclosure provide an apparatus for detecting a camera occlusion, comprising: a background image determining unit, configured to determine a background image corresponding to a current time period in response to a camera not moving; a foreground image determining unit, configured to determine, according to an actual image of a current frame and the background image, a foreground image of the current frame; a target area determining unit, configured to determine a target area of a separate object having a largest outer contour in the foreground image; and an occlusion state determining unit, configured to determine an occlusion state of the camera at the current frame according to the target area.

In a third aspect, embodiments of the present disclosure provide an electronic device, comprising: one or more processors; and a memory, storing one or more programs, wherein the one or more programs, when executed by the one or more processors, cause the one or more processors to implement the method for detecting a camera occlusion provided by the first aspect.

In a fourth aspect, embodiments of the present disclosure provide a computer-readable medium, storing a computer program thereon, wherein the program, when executed by a processor, causes the processor to implement the method for detecting a camera occlusion provided by the first aspect.

In a fifth aspect, an embodiment of the present disclosure provides a computer program product, comprising a computer program, wherein the computer program, when executed by a processor, implements the method for detecting a camera occlusion provided by the first aspect.

According to the method for detecting a camera occlusion provided in the embodiments of the present disclosure, the background image corresponding to the current time is first determined period on the basis that the camera does not move. Then, according to the actual image of the current frame and the background image , the foreground image of the current frame is determined. Next, the target area of the separate object having the largest outer contour in the foreground image is determined. Finally, the occlusion state of the camera at the current frame is determined according to the target area.

According to the present disclosure, the background image is controlled to correspond to the time when the camera does not move, so as to avoid the error discrimination that the moving camera is erroneously discriminated as being in the occlusion state. At the same time, the occlusion state is determined according to the target area of the separate object having the largest outer contour in the foreground image, which can avoid the error discrimination caused by the sum of the areas of a plurality of moving small objects exceeding the area threshold, thereby improving the accuracy of the detection for the occlusion state of the camera.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

After reading detailed descriptions of non-limiting embodiments given with reference to the following accompanying drawings, other features, objectives and advantages of the present disclosure will be more apparent.
Fig. 1 illustrates an exemplary system architecture in which the present disclosure may be applied;
Fig. 2 is a flowchart of a method for detecting a camera occlusion provided in an embodiment of the present disclosure;
Fig. 3 is a flowchart of another method for detecting a camera occlusion provided in an embodiment of the present disclosure;
Fig. 4 is a flowchart of a method for discriminating whether a camera moves provided in an embodiment of the present disclosure;
Fig. 5 is a flowchart of a method for detecting a camera occlusion and warning in combination with an actual application scenario, provided in an embodiment of the present disclosure;
Fig. 6 is a structure block diagram of an apparatus for detecting a camera occlusion provided in an embodiment of the present disclosure; and
Fig. 7 is a schematic structural diagram of an electronic device suitable for performing the method for detecting a camera occlusion in the embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description. It should be noted that the embodiments in the present disclosure and the features in the embodiments may be combined with each other on a non-conflict basis.

In the technical solution of the present disclosure, the acquisition, storage, application, etc. of the personal information of a user all comply with the provisions of the relevant laws and regulations, necessary confidentiality measures are taken, and public order and good customs are not violated.

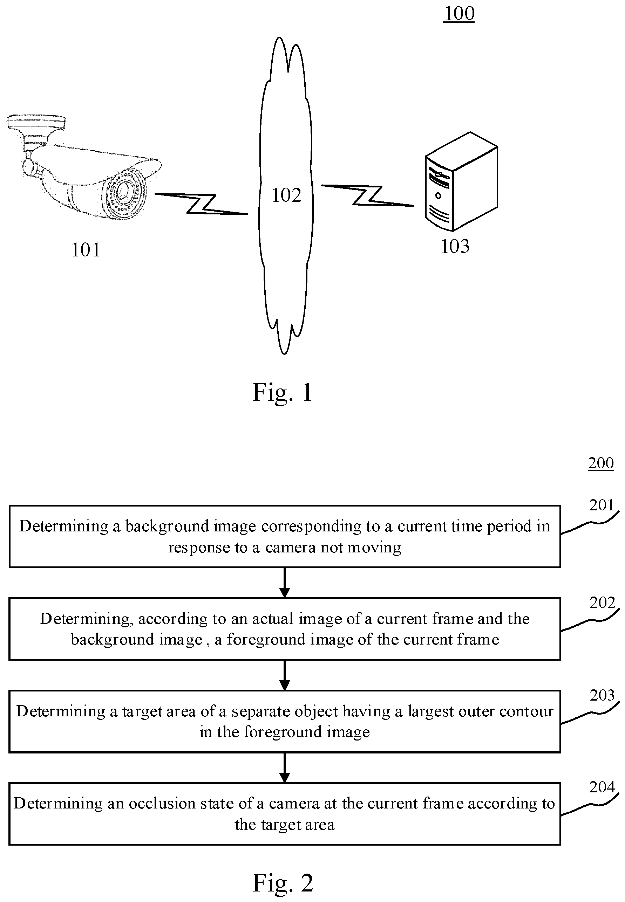

Fig. 1 illustrates an exemplary system architecture 100 in which an embodiment of a method and apparatus for detecting a camera occlusion, an electronic device and a computer readable storage medium according to the present disclosure may be applied.

As shown in Fig. 1, the system architecture 100 may include camera 101, a network 102 and a server 103. The network 102 serves as a medium providing a communication link between the camera 101 and the server 103. The network 102 may include various types of connections, for example, wired or wireless communication links, or optical fiber cables.

The image or audio/video data photographed by the camera 101 can be transmitted to the server 103 through the network 102 for storage, analysis and processing. The server 103 may alternatively adjust the working state of the camera 101 according to a control instruction inputted by a user, for example, controlling the rotation of a monitoring orientation, a turn-off and a restart. Various applications (e.g., a monitoring application, a camera control application and an instant communication application) for implementing an information communication between the camera 101 and the server 103 may be installed on the camera 101 and the server 103.

The camera 101 may be represented as various electronic devices having a photographing function or photographing component, for example, a smart phone, a tablet computer, a laptop portable computer and a desktop computer that are provided with a camera, a dome camera, a bullet camera. In addition to being directly represented as hardware, the server 103 can be represented as software. When represented as the hardware, the server 103 may be implemented as a distributed server cluster composed of a plurality of servers, or may be implemented as a single server. When represented as the software, the server 103 may be implemented as a plurality of pieces of software or a plurality of software modules, or may be implemented as a single piece of software or a single software module, which will not be specifically limited here.

The server 103 can provide various services through various built-in applications. Taking a camera occlusion discrimination application that may provide an analysis on a camera occlusion state based on a received image photographed by the camera as an example, the server 103, when running the camera occlusion discrimination application, may achieve the following effects. First, the working state of the camera is read from the camera 101 through the network 102, to discriminate whether the camera 101 is in a moving state. Then, when it is determined that the camera 101 does not move, a background image corresponding to a current time period is determined. Next, according to an actual image of a current frame and the background image, a foreground image of the current frame is determined. Then, a target area of a separate object having a largest outer contour in the foreground image is determined. Finally, an occlusion state of the camera at the current frame is determined according to the target area.

Further, the server 103 may issue a different control instruction to the camera 101 according to the determined specific occlusion state (i.e., an occlusion state or a non-occlusion state), so as to help the camera 101 get out of the occlusion state as soon as possible.

It should be pointed out that, in addition to being acquired in real time from the camera 101 through the network 102, the background image of each time period may be pre-stored locally on the server 103 in various ways. Therefore, when detecting that the data has been stored locally, the server 103 may choose to directly acquire the data locally, so as to reduce the amount of data transmission.

Since the determination for the occlusion state based on a plurality of images requires many computing resources and a strong computing capability, the method for detecting a camera occlusion provided in the subsequent embodiments of the present disclosure is generally performed by the server 103 having a strong computing capability and many computing resources, and correspondingly, the apparatus for detecting a camera occlusion is generally provided in the server 103. The server 103 may be a local server (e.g., a personal physical machine of the user that establishes a data connection with the local camera 101), or a remote server.

It should be appreciated that the numbers of the cameras, the networks and the servers in Fig. 1 are merely illustrative. Any number of cameras, networks and servers may be provided based on actual requirements.

Referring to Fig. 2, Fig. 2 is a flowchart of a method for detecting a camera occlusion according to an embodiment of the present disclosure. Here, a flow 200 includes the following steps:

Step 201, determining a background image corresponding to a current time period in response to a camera not moving.

This step is intended to determine, by an executing body (e.g., the server 103 shown in Fig. 1) of the method for detecting a camera occlusion, the background image corresponding to the current time period, in the situation where the camera (which is a camera of which the occlusion state is to be determined) does not move.

The reason why the situation where the camera does not move is selected as the basis is that the photographed content changes due to the photographing orientation of the camera that is in a moving state. Accordingly, the original background image is no longer applicable, such that, according to the conventional background modeling-based camera occlusion method, all the images photographed in the moving state are discriminated as a foreground image different from the background image, thereby causing an error discrimination. Therefore, in order to avoid the error discrimination, it is required to perform the determination on the basis that the camera does not move, so as to ensure the availability of the obtained background image of the current time period.

Specifically, whether the camera moves can be discriminated in various ways. For example, in a situation where the working state of the camera can be directly read (e.g., the work log of each operation performed by the camera can be read), whether the camera moves can be directly discriminated according to the read working state. Alternatively, whether the camera moves can be determined according to the positions of the same object in the photographed images. The specific approach can be selected flexibly according to actual situations, and is not specifically limited here.

Step 202, determining, according to an actual image of a current frame and the background image, a foreground image of the current frame.

Based on step 201, this step is intended to determine, by the above executing body, the foreground image of the current frame according to the actual image of the current frame and the background image . Here, the foreground image is a partial image distinguished from the background image in the actual image. The background image refers to an image (which can be determined based on the determination for an absence of at least one initial image frame photographed by the occluded camera) photographed by the camera when the camera does not move and is not occluded. Once the camera is occluded by a certain object, a new image additionally appears in the actual image at this time. The new image is the "foreground image" described in the present disclosure, and the image photographed when the camera is not occluded is the "background image" described in the present disclosure, such that the specific occlusion state in which the camera is in can be determined through the image feature in the foreground image.

Step 203, determining a target area of a separate object having a largest outer contour in the foreground image.

Based on step 202, this step is intended to determine the target area of the separate object having the largest outer contour in the foreground image.

That is, there may be a plurality of separate objects in the foreground image, for example, a person, a leaf, or a splashed mud spot. The "separate" mentioned here means that the contents of the images are separate from each other and separately have a separate outer contour. In a conventional occlusion discrimination algorithm, the sum of the areas of the separate objects in the foreground image is directly compared with a preset area threshold, and it is discriminated that the camera is in an occlusion state when the sum of the areas exceeds the preset area threshold. However, through the comparison of the sum of the areas of a plurality of small objects with the area threshold, an error discrimination is easily caused by a plurality of moving small objects in practice, because the situation causing such an occlusion rarely occurs in practice.

Therefore, in order to improve the accuracy of the determination, in this step, the separate object having the largest outer contour is determined according to the outer contour of the each separate object in the foreground image, and then the area of the separate object having the largest outer contour is determined as a determination parameter used to determine the current occlusion state of the camera.

Step 204, determining an occlusion state of the camera at the current frame according to the target area.

Based on step 203, this step is intended to determine, by the above executing body, the occlusion state (i.e., whether the camera is in the occlusion state or in the normal non-occlusion state) of the camera when the camera performs photographing at the current frame, according to the size of the target area.

Generally, if the target area is large, it means that the occlusion object is large, and the possibility of affecting the normal photograph of the camera is high. Therefore, the camera should be determined to be in the occlusion state, and conversely, the camera should be determined to be in a non-occlusion state. Specifically, a critical value-area threshold that is used to measure which occlusion state the target area corresponds to may be set. For example, when the target area is greater than the area threshold, the camera at this time is discriminated to be in the occlusion state. Conversely, when the target area is not greater than the area threshold, the camera at this time is discriminated to be in the non- occlusion state. Alternatively, it is possible to predetermine the respective area value ranges for different occlusion states, and determine the occlusion state according to the area value interval which the target area falls into.

According to the method for detecting a camera occlusion provided in the embodiment of the present disclosure, the background image is controlled to correspond to the time when the camera does not move, so as to avoid the error discrimination that the moving camera is erroneously discriminated as being in the occlusion state. At the same time, the occlusion state is determined according to the target area of the separate object having the largest outer contour in the foreground image, which can avoid the error discrimination caused by the sum of the areas of a plurality of moving small objects exceeding the area threshold, thereby improving the accuracy of the detection for the occlusion state of the camera.

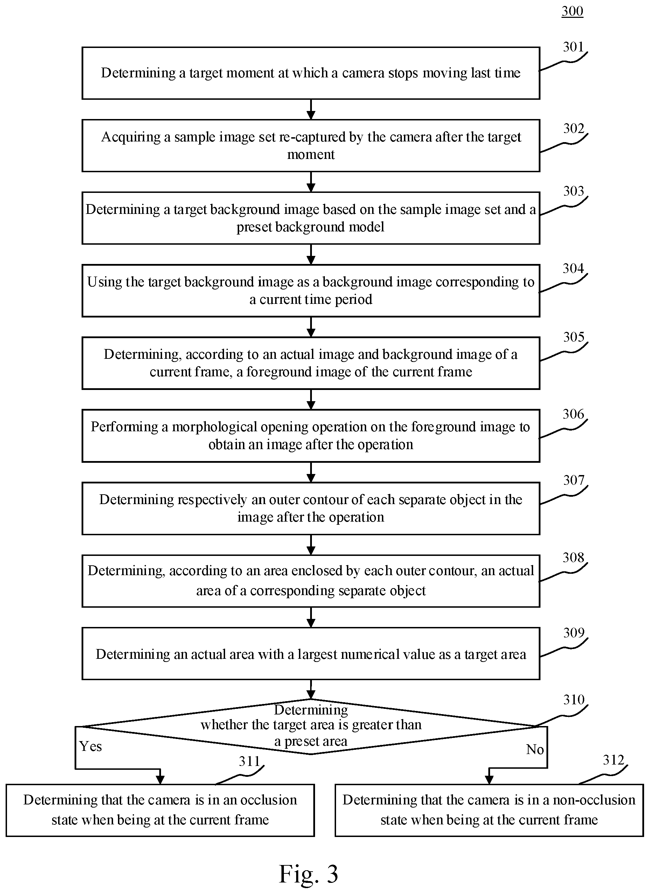

Referring to Fig. 3, Fig. 3 is a flowchart of another method for detecting a camera occlusion according to an embodiment of the present disclosure. Here, a flow 300 includes the following steps:

Step 301, determining a target moment at which a camera stops moving last time.

That is, the target moment is a moment which is closest to the current moment and at which the camera stops moving. If that the current moment is 10:01:00, and a time period which is closest to the current moment and during which the camera moves is 09:54:23-09:56:32, the target moment should be at least 09:56:32, or a moment later than 09:56:32, for example, 09:56:33.

Step 302, acquiring a sample image set re-photographed by the camera after the target moment.

Based on step 301, this step is intended to acquire, by the above executing body, an image re-photographed by the camera after the target moment, and collect the image into the sample image set.

The purpose of obtaining the sample image set according to this step is to ensure that the original image for determining the target background image is obtained in the situation where the camera does not move, so as to ensure the availability of the target background image.

Step 303, determining a target background image based on the sample image set and a preset background model.

Here, the background model described in this step is specifically used to construct, according to the inputted image, a model for judging which part of the actual image belongs to the foreground image. That is, the background model maintains the background image of a current time period according to an inputted image.

An implementation may include (but not limited to) the following steps:
selecting preset number of previous frames of sample images sorted according to a time axis from the sample image set;
scaling the sample images to a given size, and converting sample images having consistent sizes into grayscale images to obtain a sample grayscale image set; and
determining a target background image corresponding to the sample grayscale image set using a background model.

The selection for the preset previous frames sorted according to the time axis is to avoid the change of the image content in the later stage by selecting the images as early as possible. Scaling sizes to be consistent is to eliminate the influence of the images of different sizes on the subsequent determination for the background image. Converting the images having into the grayscale images is to better determine the background image according to grayscale information. Clearly, the above implementation may be adjusted in combination with an actual requirement to achieve the same or similar effects, which will not be listed one by one here.

Step 304, using the target background image as a background image corresponding to a current time period.

With respect to step 201 in the flow 200, steps 301-304 provide a specific implementation. In the situation where the time information when the camera moves last time can be acquired, it is ensured by means of the background model that the acquired background image of the current time period is available.

Step 305, determining, according to an actual image of a current frame and the background image, a foreground image of the current frame.

Step 306, performing a morphological opening operation on the foreground image to obtain an image after the operation.

Here, the morphological opening operation on the image is essentially that a corrosion operation is first performed on the foreground image and then an expansion operation is performed on the result of the corrosion operation, the effect of which is similar to that of separating the two finely connected objectives. This step is to determine the outer contour of the each separate object more accurately through this operation.

Step 307, determining respectively an outer contour of each separate object in the image after the operation.

Step 308, determining respectively, according to an area enclosed by each outer contour, an actual area of a corresponding separate object.

Step 309, determining an actual area with a largest numerical value as a target area.

With respect to step 203 in the flow 200, steps 306-309 provide a specific implementation. The morphological opening operation is performed on the foreground image to discriminate the demarcation of the each separate object more accurately. Then, the corresponding area is determined according to the outer contour of the each separate object. Finally, according to the value of the area, the largest area is selected as the target area.

Step 310, determining whether the target area is greater than a preset area; performing step 311 if the target area is greater than the preset area; otherwise, performing step 312.

Step 311, determining that the camera at the current frame is in an occlusion state.

Based on the determination result in step 310 that the target area is greater than the preset area, this step is intended to determine, by the above executing body, that the camera at the current frame is in a state of being occluded by a separate occlusion object, due to the separate occlusion object having an area greater than the preset area.

Step 312, determine that the camera at the current frame is in a non-occlusion state.

Based on the determination result in step 310 that the target area is not greater than the preset area, this step is intended to determine temporarily, by the above executing body, that the camera is not in an occlusion state due to an occlusion object having an area not greater than the preset area.

Unlike the embodiment shown in the flow 200, steps 301-304 in this embodiment provide a specific implementation in which the background image in the situation where the camera does not move is acquired, that is, in the situation where the time information when the camera moves last time can be acquired, it is ensured by means of the background model that the acquired background image of the current time period is available. Steps 306-309 provide a specific implementation in which the target area is determined, that is, the morphological opening operation is performed on the foreground image to discriminate the demarcation of the each separate object more accurately, the corresponding area is then determined according to the outer contour of the each separate object, and finally, the largest area is selected as the target area according to the value of the area. Steps 310-312 provide a specific implementation in which which occlusion state the camera is in is determined based on the comparison with the preset area.

It should be understood that there is no dependency and causal relationships between the specific implementations respectively corresponding to steps 301-304, steps 306-309 and steps 310-312. Each of the above three parts can be independently used as a subordinate implementation of a corresponding superordinate concept, and can totally form a different embodiment by replacing the corresponding superordinate concept on the basis of the embodiment shown in the flow 200. This embodiment only exists as a preferred embodiment including the above three parts at the same time.

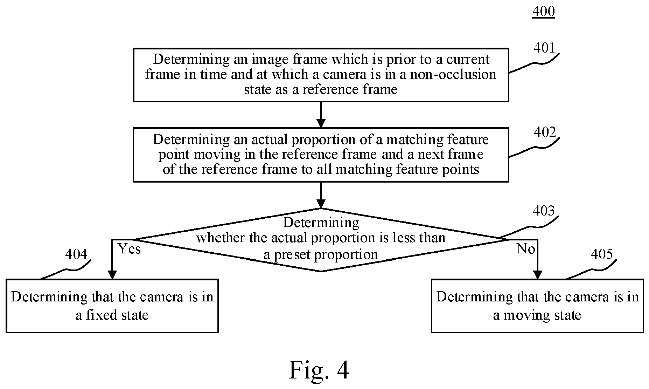

In order to facilitate a better understanding of the determination for whether the camera is in a moving state, thereby ensuring the effectiveness of the acquisition for the background image, and considering that the execution log used to determine the working state cannot be acquired directly in most scenarios, the present disclosure further provides, through Fig. 4, an implementation in which whether a camera moves is determined based on a photographed image. Here, a flow 400 includes the following steps:

Step 401, determining an image frame which is prior to a current frame in time and at which a camera is in a non-occlusion state as a reference frame.

Assuming that the current frame is a 60th frame in a frame sequence, it is determined that the camera at the neighboring 55th to 59th frames is in the non-occlusion state, according to the scheme provided in the above embodiment.

In order to ensure the accuracy and availability of the background image as much as possible, the frame close in time to the current frame should be selected as the reference frame as much as possible. Therefore, the 59th frame can preferably be selected as the reference frame (in the case where only a single frame needs to be selected as the reference frame). Alternatively, the 55th to 59th frames can be selected as the continuous reference frames in the case where a plurality of continuous frames can be selected as the continuous reference frames).

Step 402, determining an actual proportion of a matching feature point of which a position moves in the reference frame and a next frame of the reference frame to all matching feature points.

Taking the above assumption as an example, in this step, the actual proportion of the matching feature point of which the position moves in the 59th frame and the 60th frame (the current frame) to all the matching feature points is calculated. The matching feature point only refers to the same feature point on the same object corresponding to the two frames of images. Therefore, when the position of the matching feature point changes, it means that the position of the object on different image frames changes. There are usually two reasons for this situation. First, the object itself moves, but the camera does not move. Second, the object itself does not move, but the camera moves.

However, the specific reason may be determined according to the value of the actual proportion. For the reason that the camera moves, the value of the actual proportion is relatively large because the movement of the camera causes the movement of matching feature points of all the objects. On the contrary, if the actual proportion is relatively small, it often indicates that there may be a certain object moving independently (the probability of uniform movement of all the objects is relatively small).

Step 403, determining whether the actual proportion is less than a preset proportion; performing step 404 if the actual proportion is less than the preset proportion; otherwise, performing step 405.

This step is intended to select, by the above executing body, different processing branches according to the relationship between values of the actual proportion and the preset proportion. It should be understood that the preset proportion used in this step is a pre-selected critical value suitable for measuring which working state of the camera that the numerical value of the actual proportion corresponds to, and the critical value can be flexibly selected according to the actual situation.

Step 404, determining that the camera is in a fixed state.

Based on the determination result that the actual proportion is less than the preset proportion, this step is intended to determine, by the above executing body, that the camera is currently in the fixed state (i.e., the camera does not move) due to the small actual proportion.

Step 405, determining that the camera is in a moving state.

Based on the determination result that the actual proportion is not less than the preset proportion, this step is intended to determine, by the above executing body, that the camera is currently in the moving state due to the large actual proportion.

On the basis of any of the above embodiments, considering that there is often a requirement to timely repair and correct the camera in the occlusion state in an actual application scenario, the present disclosure further provides the following steps to provide an occlusion alarm so as to attempt to issue a reminder or trigger signal to a manager or an automatic repair apparatus through a reasonable alarm approach:
statisticizing an actual number of frames at which the camera is in the occlusion state;
generating an occlusion alarm for the camera, in response to the actual number of the frames being greater than a first number of frames and less than a second number of frames; and
reducing a level of the alarm and retaining an unviewed alarm reminder, in response to the actual number of the frames being greater than the second number of the frames and less than a third number of frames.

When the actual number of the frames is controlled to be greater than the first number of the frames and less than the second number of the frames, the occlusion alarm is generated for the camera, such that an unnecessary alarm or false alarm due to a single frame of occlusion caused by an accidental factor is avoided, thereby improving the accuracy of the alarm. At the same time, when the actual number of the frames is controlled to be greater than the second number of the frames and less than the third number of the frames, the level of the alarm is reduced and the unviewed alarm reminder is retained, to avoid unnecessary interference due to the long presence of the alarm.

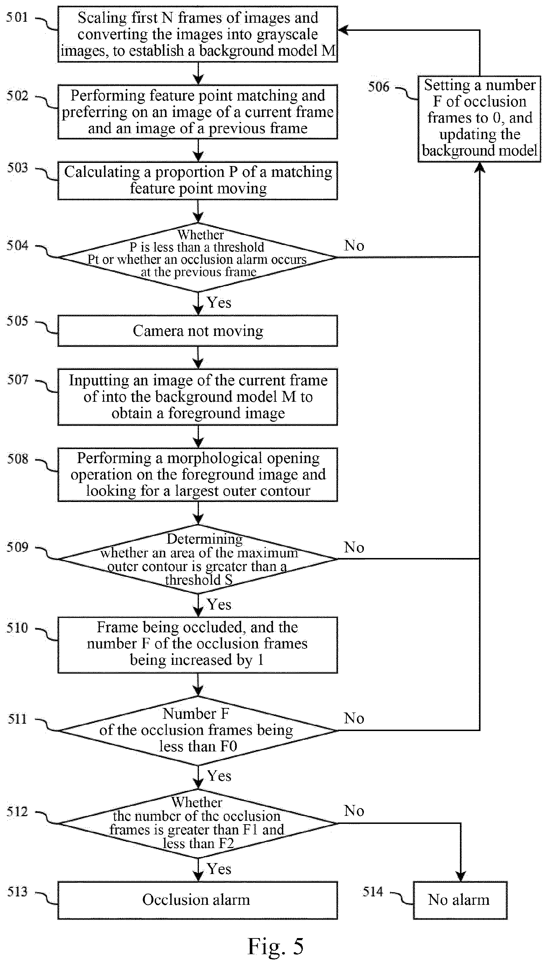

For a deeper understanding, the present disclosure further provides a method for detecting a camera occlusion as shown in Fig. 5, in combination with a specific application scenario.
Step 501, scaling N previous frames of images and converting the images into grayscale images, to establish a background model M;
Step 502, performing feature point matching and preferring on an image of a current frame and an image of a previous frame;
Step 503, calculating a proportion P of a matching feature point moving;
Step 504, determining whether P is less than a threshold Pt or whether an occlusion alarm occurs at the previous frame;
Step 505, determining that a camera does not move, if P is less than Pt or the occlusion alarm occurs at the previous frame;
Step 506, setting a number F of occlusion frames to 0 and updating the background model using a re-acquired image, if P is not less than Pt and the occlusion alarm does not occur at the previous frame, if an area of a largest outer contour is not greater than S, or if the number F of the occlusion frames is not less than F0;
Step 507, inputting the image of the current frame of into the background model M to obtain a foreground image;
Step 508, performing a morphological opening operation on the foreground image and looking for the largest outer contour;
Step 509, determining whether the area of the largest outer contour is greater than the threshold S;
Step 510, determining that the current frame is a frame photographed by the camera in an occlusion state, and increasing the number F of the occlusion frames by 1;
Step 511, determining whether the number F of the occlusion frames is less than F0;
Step 512, further determining whether the number F of the occlusion frames is greater than F1 and less than F2, if the number F of the occlusion frames is less than F0;
Step 513, issuing an occlusion alarm, if the number F of the occlusion frames is greater than F1 and less than F2; and
Step 514, there being no occlusion alarm, if the number F of the occlusion frames is not greater than F1.

In the above example, F1<F2<F0.

It can be seen that steps 502-504 in the above example are used to determine whether there is a movement in the two adjacent frames of images, and it is considered that the camera is not occluded if there is a movement. Steps 507-509 are used to calculate the area of the largest contour in the foreground image, which avoids the problem that the area is relatively large due to a plurality of separate small objects, and it is considered that the camera is occluded at the current frame if the area exceeds an occlusion threshold. Steps 510-512 are used to determine whether there is an occlusion alarm. When the number of the occlusion frames is too large (is greater than F0), the background model is forced to be updated, to avoid a long-time continuous error discrimination. Only when the number of the occlusion frames is in the range from F1 to F2, the occlusion alarm is generated.

That is, in the above example, the determination for both the relationship between P and Pt and whether the occlusion alarm occurs at the previous frame in step 504 is controlled, thereby solving the problem of the error discrimination that occurs when the camera moves. In step 508, the morphological opening operation is performed on the foreground image, and the largest outer contour is looked for, rather than all the contours. In step 509, the determination is performed based on whether the area of the largest outer contour is greater than the threshold S. Accordingly, the problem that the error discrimination of the occlusion is caused by a determination performed using the areas of all of a plurality of outer contours obtained when a plurality of small objects move is avoided. In addition, whether the number of the occlusion frames is too large or for a long time is determined through the determination for whether the number of the occlusion frames is greater than F0 in step 511. If the condition is satisfied, the background model is forced to be updated, to avoid a longer-time continuous error discrimination caused by the error discrimination of the occlusion.

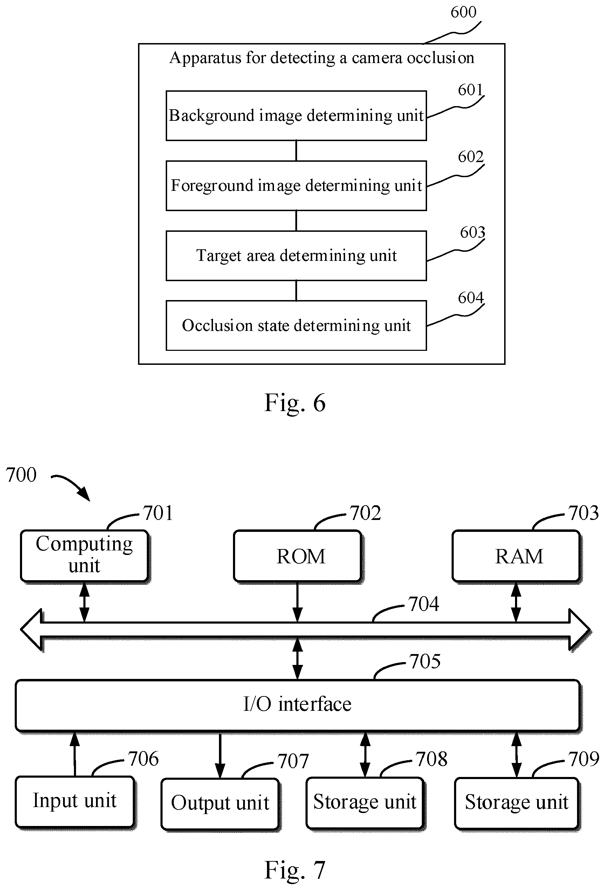

Further referring to Fig. 6, as an implementation of the method shown in the above drawings, the present disclosure provides an embodiment of an apparatus for detecting a camera occlusion. The embodiment of the apparatus corresponds to the embodiment of the method shown in Fig. 2. The apparatus may be applied in various electronic devices.

As shown in Fig. 6, the apparatus 600 for detecting a camera occlusion in this embodiment may include: a background image determining unit 601, a foreground image determining unit 602, a target area determining unit 603 and an occlusion state determining unit 604. Here, the background image determining unit 601 is configured to determine a background image corresponding to a current time period in response to a camera not moving. The foreground image determining unit 602 is configured to determine, according to an actual image of a current frame and the background image, a foreground image of the current frame. The target area determining unit 603 is configured to determine a target area of a separate object having a largest outer contour in the foreground image. The occlusion state determining unit 604 is configured to determine an occlusion state of the camera at the current frame according to the target area.

In this embodiment, for specific processes of the background image determining unit 601, the foreground image determining unit 602, the target area determining unit 603 and the occlusion state determining unit 604 in the apparatus 600 for detecting a camera occlusion, and their technical effects, reference may be respectively made to relative descriptions of steps 201-204 in the corresponding embodiment of Fig. 2, and thus the specific processes and the technical effects will not be repeated here.

In some alternative implementations of this embodiment, the target area determining unit 603 may be further configured to:
perform a morphological opening operation on the foreground image to obtain an image after the operation;
determine respectively an outer contour of each separate object in the image after the operation;
determine respectively, according to an area enclosed by each outer contour, an actual area of a corresponding separate obj ect; and
determine an actual area with a largest numerical value as the target area.

In some alternative implementations of this embodiment, the background image determining unit 601 may include:
a target moment determining subunit, configured to determine a target moment at which a camera stops moving last time;
a sample image set acquiring subunit, configured to acquire a sample image set re-photographed by the camera after the target moment;
a target background image determining subunit, configured to determine a target background image based on the sample image set and a preset background model; and
a background image determining subunit, configured to use the target background image as the background image corresponding to the current time period.

In some alternative implementations of this embodiment, the target background image determining subunit may be further configured to:
select preset previous frames of sample images sorted according to a time axis from the sample image set;
scale the sample images to a given size, and convert sample images having consistent sizes into grayscale images to obtain a sample grayscale image set; and
determine the target background image corresponding to the sample grayscale image set using the background model.

In some alternative implementations of this embodiment, the occlusion state determining unit 604 may be further configured to:
determine that the camera at the current frame is in the occlusion state, in response to the target area being greater than a preset area; and
determine that the camera at the current frame is in a non-occlusion state, in response to the target area being not greater than the preset area.

In some alternative implementations of this embodiment, the apparatus 600 for detecting a camera occlusion may further include: a moving state determining unit, configured to determine a moving state of the camera. Here, the moving state determining unit may be further configured to:
determine an image frame which is prior to the current frame in time and at which the camera is in the non-occlusion state as a reference frame;
determine an actual proportion of a matching feature point of which a position moves in the reference frame and a next frame of the reference frame to all matching feature points;
determine that the camera is in a fixed state, in response to the actual proportion being less than a preset proportion; and
determine that the camera is in the moving state, in response to the actual proportion being not less than the preset proportion.

In some alternative implementations of this embodiment, the apparatus 600 for detecting a camera occlusion may further include:
an occlusion frame number statisticizing unit, configured to statisticize an actual number of frames at which the camera is in the occlusion state;
an occlusion alarm generating unit, configured to generate an occlusion alarm for the camera, in response to the actual number of the frames being greater than a first number of frames and less than a second number of frames; and
an alarm level processing unit, configured to reduce a level of the alarm and retain an unviewed alarm reminder, in response to the actual number of the frames being greater than the second number of the frames and less than a third number of frames.

This embodiment exists as an apparatus embodiment corresponding to the above method embodiment. According to the apparatus for detecting a camera occlusion provided in the embodiment of the present disclosure, the background image is controlled to correspond to the time when the camera does not move, so as to avoid the error discrimination that the moving camera is erroneously discriminated as being in the occlusion state. At the same time, the occlusion state is determined according to the target area of the separate object having the largest outer contour in the foreground image, which can avoid the error discrimination caused by the sum of the areas of a plurality of moving small objects exceeding the area threshold, thereby improving the accuracy of the detection for the occlusion state of the camera.

According to an embodiment of the present disclosure, the present disclosure further provides an electronic device, including at least one processor and a storage device communicated with the at least one processor. Here, the storage device stores an instruction executable by the at least one processor, and the instruction is executed by the at least one processor, to enable the at least one processor to implement the method for detecting a camera occlusion described in any one of the above embodiments.

According to an embodiment of the present disclosure, the present disclosure further provides a readable storage medium, storing a computer instruction. The computer instruction is used to enable a computer to implement the method for detecting a camera occlusion described in any one of the above embodiments.

An embodiment of the present disclosure provides a computer program product. When executed by a processor, a computer program can implement the method for detecting a camera occlusion described in any one of the above embodiments.

Fig. 7 is a schematic block diagram of an example electronic device 700 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 7, the device 700 includes a computation unit 701, which may execute various appropriate actions and processes in accordance with a computer program stored in a read-only memory (ROM) 702 or a computer program loaded into a random access memory (RAM) 703 from a storage unit 708. The RAM 703 also stores various programs and data required by operations of the device 700. The computation unit 701, the ROM 702 and the RAM 703 are connected to each other through a bus 704. An input/output (I/O) interface 705 is also connected to the bus 704.

The following components in the device 700 are connected to the I/O interface 705: an input unit 706, for example, a keyboard and a mouse; an output unit 707, for example, various types of displays and a speaker; a storage device 708, for example, a magnetic disk and an optical disk; and a communication unit 709, for example, a network card, a modem, a wireless communication transceiver. The communication unit 709 allows the device 700 to exchange information/data with an other device through a computer network such as the Internet and/or various telecommunication networks.

The computation unit 701 may be various general-purpose and/or special-purpose processing assemblies having processing and computing capabilities. Some examples of the computation unit 701 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 701 performs the various methods and processes described above, for example, the method for detecting a camera occlusion. For example, in some embodiments, the method for detecting a camera occlusion may be implemented as a computer software program, which is tangibly included in a machine readable medium, for example, the storage device 708. In some embodiments, part or all of the computer program may be loaded into and/or installed on the device 700 via the ROM 702 and/or the communication unit 709. When the computer program is loaded into the RAM 703 and executed by the computation unit 701, one or more steps of the above method for detecting a camera occlusion may be performed. Alternatively, in other embodiments, the computation unit 701 may be configured to perform the method for detecting a camera occlusion through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, also known as cloud computing server or cloud host. It is a host product in the cloud computing service system to solve the defects in traditional physical host and virtual private server (VPS) services that management is difficult and business expansion is weak.

According to the technical solution of the embodiments of the present disclosure, the background image is controlled to correspond to the time when the camera does not move, so as to avoid the error discrimination that the moving camera is erroneously discriminated as being in the occlusion state. At the same time, the occlusion state is determined according to the target area of the separate object having the largest outer contour in the foreground image, which can avoid the error discrimination caused by the sum of the areas of a plurality of moving small objects exceeding the area threshold, thereby improving the accuracy of the detection for the occlusion state of the camera.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for detecting a camera occlusion, comprising:
determining (201) a background image corresponding to a current time period in response to a camera not moving;
determining (202), according to an actual image of a current frame and the background image, a foreground image of the current frame;
determining (203) a target area of a separate object having a largest outer contour in the foreground image; and
determining (204) an occlusion state of the camera at the current frame according to the target area.

2. The method according to claim 1, wherein the determining (203) a target area of a separate object having a largest outer contour in the foreground image comprises:
performing (306) a morphological opening operation on the foreground image to obtain an image after the operation;
determining (307) respectively an outer contour of each separate object in the image after the operation;
determining (308) respectively, according to an area enclosed by the outer contour, an actual area of a corresponding separate object; and
determining (309) an actual area with a largest numerical value as the target area.

3. The method according to any one of claims 1-2, wherein the determining (201) a background image corresponding to a current time period comprises:
determining (301) a target moment at which a camera stops moving last time;
acquiring (302) a sample image set re-photographed by the camera after the target moment;
determining (303) a target background image based on the sample image set and a preset background model; and
using (304) the target background image as the background image corresponding to the current time period.

4. The method according to claim 3, wherein the determining (303) a target background image based on the sample image set and a preset background model comprises:
selecting preset previous frames of sample images sorted according to a time axis from the sample image set;
scaling the sample images to a given size, and converting sample images having consistent sizes into grayscale images to obtain a sample grayscale image set; and
determining the target background image corresponding to the sample grayscale image set using the background model.

5. The method according to any one of claims 1-4, wherein the determining (204) an occlusion state of the camera at the current frame according to the target area comprises:
determining (311) that the camera at the current frame is in the occlusion state, in response to the target area being greater than a preset area; and
determining (312) that the camera at the current frame is in a non-occlusion state, in response to the target area being not greater than the preset area.

6. The method according to any one of claims 1-5, further comprising: determining a moving state of the camera, wherein the determining a moving state of the camera comprises:
determining (401) an image frame which is prior to the current frame in time and at which the camera is in the non-occlusion state as a reference frame;
determining (402) an actual proportion of a matching feature point of which a position moves in the reference frame and a next frame of the reference frame to all matching feature points;
determining (404) that the camera is in a fixed state, in response to the actual proportion being less than a preset proportion; and
determining (405) that the camera is in the moving state, in response to the actual proportion being not less than the preset proportion.

7. The method according to any one of claims 1-6, further comprising:
statisticizing an actual number of frames at which the camera is in the occlusion state;
generating an occlusion alarm for the camera, in response to the actual number of the frames being greater than a first number of frames and less than a second number of frames; and
reducing a level of the alarm and retaining an unviewed alarm reminder, in response to the actual number of the frames being greater than the second number of the frames and less than a third number of frames.

8. An apparatus for detecting a camera occlusion, comprising:
a background image determining unit (601), configured to determine a background image corresponding to a current time period in response to a camera not moving;
a foreground image determining unit (602), configured to determine, according to an actual image of a current frame and the background image, a foreground image of the current frame;
a target area determining unit (603), configured to determine a target area of a separate object having a largest outer contour in the foreground image; and
an occlusion state determining unit (604), configured to determine an occlusion state of the camera at the current frame according to the target area.

9. The apparatus according to claim 8, wherein the target area determining unit (603) is further configured to:
perform a morphological opening operation on the foreground image to obtain an image after the operation;
determine respectively an outer contour of each separate object in the image after the operation;
determine respectively, according to an area enclosed by the outer contour, an actual area of a corresponding separate object; and
determine an actual area with a largest numerical value as the target area.

10. The apparatus according to any one of claims 8-9, wherein the background image determining unit (601) comprises:
a target moment determining subunit, configured to determine a target moment at which a camera stops moving last time;
a sample image set acquiring subunit, configured to acquire a sample image set re-photographed by the camera after the target moment;
a target background image determining subunit, configured to determine a target background image based on the sample image set and a preset background model; and
a background image determining subunit, configured to use the target background image as the background image corresponding to the current time period.

11. The apparatus according to claim 10, wherein the target background image determining subunit is further configured to:
select preset previous frames of sample images sorted according to a time axis from the sample image set;
scale the sample images to a given size, and convert sample images having consistent sizes into grayscale images to obtain a sample grayscale image set; and
determine the target background image corresponding to the sample grayscale image set using the background model.

12. The apparatus according to any one of claims 8-11, wherein the occlusion state determining unit (604) is further configured to:
determine that the camera at the current frame is in the occlusion state, in response to the target area being greater than a preset area; and
determine that the camera at the current frame is in a non-occlusion state, in response to the target area being not greater than the preset area.

13. An electronic device, comprising:
at least one processor; and
a storage device, communicated with the at least one processor,
wherein the storage device stores an instruction executable by the at least one processor, and the instruction is executed by the at least one processor, to enable the at least one processor to perform the method for detecting a camera occlusion according to any one of claims 1-7.

14. A non-transitory computer readable storage medium, storing a computer instruction, wherein the computer instruction is used to cause a computer to perform the method for detecting a camera occlusion according to any one of claims 1-7.

15. A computer program product, comprising a computer program, wherein the computer program, when executed by a processor, implements the method for detecting a camera occlusion according to any one of claims 1-7.
